(19) Europäisches Patentamt
European Patent Office
Office européen des brevets

(11) EP 4 400 533 A1

# (12) EUROPEAN PATENT APPLICATION

published in accordance with Art. 153(4) EPC

(43) Date of publication:
**17.07.2024 Bulletin 2024/29**

(21) Application number: **22864746.7**

(22) Date of filing: **05.09.2022**

(51) International Patent Classification (IPC):
***C08G 65/40*** *(2006.01)* ***C08G 81/00*** *(2006.01)*

(52) Cooperative Patent Classification (CPC):
**C08G 65/40; C08G 81/00**

(86) International application number:
**PCT/JP2022/033206**

(87) International publication number:
**WO 2023/033164 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2021 JP 2021144891**

(71) Applicant: **Sumitomo Chemical Company, Limited**
**Tokyo 103-6020 (JP)**

(72) Inventors:
- **SUMI Yurika**
  **Tsukuba-shi, Ibaraki 300-3294 (JP)**
- **ITO Kazuyuki**
  **Tsukuba-shi, Ibaraki 300-3294 (JP)**

(74) Representative: **Vossius & Partner Patentanwälte Rechtsanwälte mbB**
**Siebertstrasse 3**
**81675 München (DE)**

## (54) BLOCK COPOLYMER

(57) A block copolymer containing an aromatic polysulfone block (A) and a polyoxyalkylene block (B), wherein the block copolymer has at least one terminal OH group at a main chain terminal, and the number of the terminal OH groups per 100 units of the structural units constituting the aromatic polysulfone block (A), calculated from peak areas of a spectrum acquired by $^1$H-NMR measurement, is 0.43 or more but 2 or less.

EP 4 400 533 A1

## Description

### Technical Field

The present invention relates to a block copolymer.

Priority is claimed on Japanese Patent Application No. 2021-144891, filed September 6, 2021, the content of which is incorporated herein by reference.

### Background Art

Aromatic polysulfones exhibit excellent heat resistance and chemical resistance, and are therefore used in a variety of applications. Depending on the application, a hydrophilized aromatic polysulfone is sometimes desirable.

Conventionally, block copolymers having the aromatic polysulfone as a polymer chain have been produced. Block copolymers containing a polyoxyalkylene block in addition to the aromatic polysulfone block tend to exhibit superior hydrophilicity.

For example, Patent Document 1 discloses a method for producing a polyarylethersulfone-polyalkylene oxide block copolymer.

### Citation List

### Patent Document

Patent Document 1
JP2016-516876A

### Summary of Invention

### Problems to be solved by Invention

Aromatic polysulfones are sometimes used as materials for forming separation membranes, and it is desirable that the obtained separation membrane is resistant to fouling.

The present invention has been developed to address the types of issues described above, and has an object of providing a block copolymer which contains an aromatic polysulfone block and a polyoxyalkylene block, and is ideal as a material for forming a separation membrane with excellent fouling resistance.

### Means to Solve the Problems

Following intensive investigation to solve the above problem, the inventors of the present invention discovered that in a block copolymer containing an aromatic polysulfone block and a polyoxyalkylene block and having at least one terminal OH group at a main chain terminal, by ensuring that the number of terminal OH groups per 100 units of the structural units constituting the aromatic polysulfone block, calculated from peak areas of a spectrum acquired by $^1$H-NMR measurement, falls within a specific range, the fouling resistance of the obtained separation membrane could be improved, enabling them to complete the present invention.

In other words, the present invention includes the following aspects.

<1> A block copolymer containing an aromatic polysulfone block (A) and a polyoxyalkylene block (B), wherein

the block copolymer has at least one terminal OH group at a main chain terminal, and
the number of the terminal OH groups per 100 units of the structural units constituting the aromatic polysulfone block (A), calculated from peak areas of a spectrum acquired by $^1$H-NMR measurement, is 0.43 or more but 2 or less.

<2> The block copolymer according to <1>, wherein the number of the terminal OH groups bonded to the polyoxyalkylene block (B) per 100 units of the structural units constituting the aromatic polysulfone block (A), calculated from peak areas of a spectrum acquired by $^1$H-NMR measurement, is 0.43 or more but 2 or less.

<3> The block copolymer according to <1> or <2>, wherein the ratio represented by weight of the polyoxyalkylene block (B) / weight of the aromatic polysulfone block (A) is 0.05 or more.

<4> The block copolymer according to any one of <1> to <3>, wherein the aromatic polysulfone block (A) consists of a polymer chain having structural units represented by general formula (1) shown below:

[Chemical formula 1]

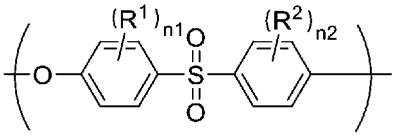

(1)

[wherein in formula (1),

$R^1$ and $R^2$ each independently represent an alkyl group having 1 to 10 carbon atoms, an aryl group having 6 to 20 carbon atoms, or a halogen atom,
n1 and n2 each independently represent an integer of 0 to 4, and
when n1 or n2 is 2 or more, the plurality of $R^1$ or $R^2$ groups in the aromatic polysulfone block (A) may be the same or different from each other.]

<5> The block copolymer according to any one of <1> to <4>, wherein the polyoxyalkylene block (B) consists of a polymer chain having structural units represented by general formula (2) shown below, and
the polyoxyalkylene block (B) has a terminal unit represented by general formula (2e) shown below:

[Chemical formula 2]

$$-\left(R^3-O\right)- \quad (2)$$

[wherein in formula (2), $R^3$ represents an alkylene group having 2 to 6 carbon atoms.]

[Chemical formula 3]

$$*-R^3-OH \quad (2e)$$

[wherein in formula (2e), $R^3$ represents an alkylene group having 2 to 6 carbon atoms, and * indicates a bonding site.]
<6> The block copolymer according to <5>, wherein the polyoxyalkylene block (B) consists of a polymer chain having structural units represented by formula (2-1) shown below, and
the polyoxyalkylene block (B) has a terminal unit represented by general formula (2-1e) shown below:

[Chemical formula 4]

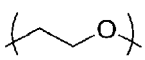

(2 − 1)

[Chemical formula 5]

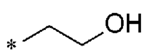

(2 − 1 e)

[wherein in formula (2-1e), * indicates a bonding site.]
<7> The block copolymer according to any one of <1> to <6>, having a weight average molecular weight from 20,000 to 150,000.
<8> The block copolymer according to any one of <1> to <7>, which is at least one type of block copolymer selected

from the group consisting of:

a linear triblock copolymer having three blocks of the polyoxyalkylene block (B) having the terminal OH group, the aromatic polysulfone block (A), and the polyoxyalkylene block (B) having the terminal OH group in this order, and
a linear diblock copolymer having two blocks of the polyoxyalkylene block (B) having the terminal OH group and the aromatic polysulfone block (A).

<9> The block copolymer according to any one of <1> to <8>, wherein the ratio of the aromatic polysulfone block (A) and the polyoxyalkylene block (B) within the total mass (100% by mass) of the block copolymer is 80% by mass or more but 100% by mass or less.

Effects of Invention

The present invention is able to provide a block copolymer which contains an aromatic polysulfone block and a polyoxyalkylene block, and is ideal as a material for forming a separation membrane with excellent fouling resistance.

Description of Embodiments

Embodiments of the block copolymer of the present invention are described below.

«Block Copolymer»

The block copolymer of the embodiment contains an aromatic polysulfone block (A) and a polyoxyalkylene block (B), wherein the block copolymer has at least one terminal OH group at a main chain terminal, and the number of these terminal OH groups per units of the 100 structural units constituting the aromatic polysulfone block (A), calculated from peak areas of a spectrum acquired by $^1$H-NMR measurement, is 0.43 or more but 2 or less.

A separation membrane formed from the block copolymer exhibits excellent fouling resistance. In this description, "fouling" means irreversible deterioration in the membrane performance, and refers, for example, to the occurrence of obstruction (pore blockages) within the separation membrane.

Evaluation of the fouling resistance of the membrane can be made on the basis of the rate of recovery for the water permeation rate of a separation membrane formed from the block copolymer of the embodiment, measured under the conditions described below. A higher rate of recovery for the water permeation rate means superior fouling resistance for the separation membrane.

[Evaluation of Fouling Resistance]

Using a pressure cell with a diameter of 47 mm, the separation membrane is cut to a circular shape to prepare a test membrane that can be mounted within the pressure cell. The test membrane is mounted in the pressure cell, pure water is then filtered through the test membrane at 23°C under a pressure of 0.2 bar (20 kPa), and the amount of pure water passing through the test membrane during the period (of 30 seconds) from the point where 9 minutes 30 seconds have elapsed since commencing the filtration to the point where 10 minutes have elapsed is measured to determine the water permeation rate ($J_0$).

Next, using the test membrane, an aqueous solution of bovine serum albumin (100 ppm) is filtered through the membrane at 23°C and the same pressure of 0.2 bar (20 kPa) for one hour. Subsequently, the test membrane is inverted, and pure water is filtered through the membrane at 23°C and 0.1 bar (10 kPa) for two minutes to wash the membrane. The test membrane is then once again inverted, pure water is filtered through the test membrane at 23°C under a pressure of 0.2 bar (20 kPa), and the amount of pure water passing through the test membrane during the period (of 30 seconds) from the point where 9 minutes 30 seconds have elapsed since commencing the filtration to the point where 10 minutes have elapsed is measured to determine the water permeation rate (J).

Based on the obtained water permeation rate ($J_0$) and the water permeation rate (J), the rate of recovery (%) for the water permeation rate for the test membrane is calculated using the formula below.

$$\text{Rate of recovery (\%) for water permeation rate} = (J/J_0) \times 100$$

$J_0$: water permeation rate ($L/m^2/h/10^5$ Pa) prior to bovine serum albumin filtration
J: water permeation rate ($L/m^2/h/10^5$ Pa) following bovine serum albumin filtration

<Aromatic Polysulfone Block (A)>

Examples of the aromatic polysulfone block (A) include blocks composed of a polymer chain having a structural unit containing at least a sulfonyl group ($-SO_2-$), an arylene group (-Ar-) and an ether linkage (-O-) bonded in that sequence.

The arylene group may have a substituent, and typical examples of the substituent include an alkyl group, an aryl group or a halogen atom.

The aromatic polysulfone block (A) preferably has a structural unit that includes a structure represented by general formula (S-1) shown below.

$$-ph^1-SO_2-ph^2-O- \qquad \text{... (S-1)}$$

[In formula (S-1), $ph^1$ and $ph^2$ each independently represent a phenylene group which may have a substituent.]

The phenylene group in $ph^1$ and $ph^2$ may be a p-phenylene group, an m-phenylene group or an o-phenylene group, but is preferably a p-phenylene group.

Examples of the substituent which the phenylene group may have include an alkyl group, an aryl group or a halogen atom.

The alkyl group is preferably an alkyl group having 1 to 10 carbon atoms, and specific examples include a methyl group, ethyl group, n-propyl group, isopropyl group, n-butyl group, isobutyl group, s-butyl group, t-butyl group, n-hexyl group, 2-ethylhexyl group, n-octyl group, and n-decyl group.

The aryl group is preferably an aryl group having 6 to 20 carbon atoms, and specific examples include a phenyl group, o-tolyl group, m-tolyl group, p-tolyl group, 1-naphthyl group, and 2-naphthyl group.

Examples of the halogen atom include a fluorine atom, chlorine atom, bromine atom, and iodine atom.

In terms of achieving superior heat resistance, chemical resistance and biocompatibility, the aromatic polysulfone block (A) preferably has a structural unit represented by general formula (1) shown below.

[Chemical formula 6]

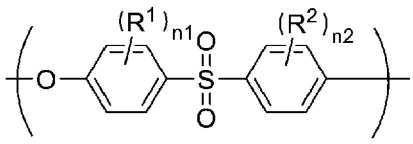

(1)

[In formula (1),

- $R^1$ and $R^2$ each independently represent an alkyl group having 1 to 10 carbon atoms, an aryl group having 6 to 20 carbon atoms, or a halogen atom,
- n1 and n2 each independently represent an integer of 0 to 4, and
- when n1 or n2 is 2 or more, the plurality of $R^1$ or $R^2$ groups in the aromatic polysulfone block (A) may be the same or different from each other.]

Examples of the alkyl group having 1 to 10 carbon atoms, the aryl group having 6 to 20 carbon atoms, and the halogen atom for $R^1$ and $R^2$ include the same moieties as those described above for the substituent which the above phenylene group may have.

Each of n1 and n2 independently represents an integer of 0 to 4, and is preferably an integer of 0 to 2, more preferably 0 or 1, and even more preferably 0.

For example, the amount of the structural unit represented by general formula (1) above, relative to a total of 100 mol% of all the structural units that constitute the aromatic polysulfone block (A), may be 80 mol% or more but 100 mol% or less, may be 90 mol% or more but 100 mol% or less, or may be 98 mol% or more but 100 mol% or less. The aromatic polysulfone block (A) may be a block composed of structural units represented by general formula (1).

<Polyoxyalkylene Block (B)>

Examples of the polyoxyalkylene block (B) include blocks composed of a polymer chain having an oxyalkylene group as a structural unit. The polyoxyalkylene block (B) preferably has a structural unit represented by general formula (2) shown below.

[Chemical formula 7]

$$-\left(R^3-O\right)- \quad (2)$$

[In formula (2), $R^3$ represents an alkylene group having 2 to 6 carbon atoms.]

The at least one terminal OH group located at a main chain terminal of the block copolymer of the embodiment is preferably bonded to the polyoxyalkylene block (B).

In other words, the block copolymer of the embodiment may contain the polyoxyalkylene block (B) having a terminal OH group at both terminals and one terminal of the main chain of the block copolymer.

In the block copolymer of the embodiment, the polyoxyalkylene block (B) consists of a polymer chain having a structural unit represented by the above general formula (2), and the polyoxyalkylene block (B) preferably has a terminal unit represented by general formula (2e) shown below. Here, the OH group in general formula (2e) corresponds with the terminal OH group of the block copolymer of the embodiment.

[Chemical formula 8]

$$*-R^3-OH \quad (2e)$$

[In formula (2e), $R^3$ represents an alkylene group having 2 to 6 carbon atoms, and * indicates a bonding site.]

Examples of the alkylene group having 2 to 6 carbon atoms for $R^3$ include an ethylene group, trimethylene group, $-CH(CH_3)CH_2-$, tetramethylene group, $-CH_2CH_2CH(CH_3)-$, and hexamethylene group.

For example, the amount of the structural unit represented by general formula (2) above, relative to a total of 100 mol% of all the structural units that constitute the polyoxyalkylene block (B), may be 80 mol% or more but 100 mol% or less, may be 90 mol% or more but 100 mol% or less, or may be 98 mol% or more but 100 mol% or less. The polyoxyalkylene block (B) may be a block composed of structural units represented by general formula (2).

Among the various options described above, the polyoxyalkylene block (B) preferably has a structural unit represented by formula (2-1) shown below.

[Chemical formula 9]

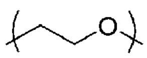 (2-1)

In the block copolymer of the embodiment, the polyoxyalkylene block (B) consists of a polymer chain having a structural unit represented by the formula (2-1) above, and the polyoxyalkylene block (B) preferably has a terminal unit represented by general formula (2-1e) shown below. Here, the OH group in general formula (2-1e) corresponds with the terminal OH group of the block copolymer of the embodiment.

[Chemical formula 10]

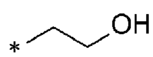 (2-1e)

[In formula (2-1e), * indicates a bonding site.]

For example, the amount of the structural unit represented by general formula (2-1) above, relative to a total of 100 mol% of all the structural units that constitute the polyoxyalkylene block (B), may be 80 mol% or more but 100 mol% or less, may be 90 mol% or more but 100 mol% or less, or may be 98 mol% or more but 100 mol% or less. The polyoxyalkylene block (B) may be a block composed of structural units represented by general formula (2-1).

There are no particular limitations on the number of blocks of the aromatic polysulfone block (A) and the polyoxyalkylene block (B) contained in the block copolymer of the embodiment.

The block copolymer of the embodiment may be a block copolymer having at least one terminal OH group at a main chain terminal, and including at least one of:

a linear block copolymer having at least three blocks of the polyoxyalkylene block (B), the aromatic polysulfone block (A), and the polyoxyalkylene block (B) in this order, and
a linear block copolymer having at least two blocks including the polyoxyalkylene block (B) and the aromatic polysulfone block (A).

The block copolymer of the embodiment may be a block copolymer having at least one terminal OH group at a main chain terminal, and including at least one type of block copolymer selected from the group consisting of:

linear block copolymers having at least three blocks of the polyoxyalkylene block (B), the aromatic polysulfone block (A), and the polyoxyalkylene block (B) in this order, and
linear block copolymers having at least two blocks including the polyoxyalkylene block (B) and the aromatic polysulfone block (A).

In this description, the term "linear" means the block copolymer has a structure that does not have any branched structures (branch chains). Examples of linear triblock copolymers include polymers in which the main chain terminals of the polymer chain of the aromatic polysulfone block (A) and the main chain terminals of the polymer chain of the polyoxyalkylene block (B) are bonded directly to one another.

The block copolymer of the embodiment may be a block copolymer having at least one terminal OH group at a main chain terminal, and including include at least one of:

a linear triblock copolymer having three blocks of the polyoxyalkylene block (B), the aromatic polysulfone block (A), and the polyoxyalkylene block (B) in this order, and
a linear diblock copolymer having two blocks of the polyoxyalkylene block (B) and the aromatic polysulfone block (A).

The block copolymer of the embodiment may be a block copolymer having at least one terminal OH group at a main chain terminal, and including at least one type of block copolymer selected from the group consisting of:

linear triblock copolymers having three blocks of the polyoxyalkylene block (B), the aromatic polysulfone block (A), and the polyoxyalkylene block (B) in this order, and
linear diblock copolymers having two blocks of the polyoxyalkylene block (B) and the aromatic polysulfone block (A).

Examples of linear triblock copolymers having three blocks of the polyoxyalkylene block (B), the aromatic polysulfone block (A), and the polyoxyalkylene block (B) in this order include polymers represented by general formula (I) shown below.

Here, the case in which the aromatic polysulfone block (A) consists of a polymer chain having structural units represented by general formula (1) shown above, and the polyoxyalkylene blocks (B) are each composed of a polymer chain having structural units represented by general formula (2) shown above is illustrated as one example.

[Chemical formula 11]

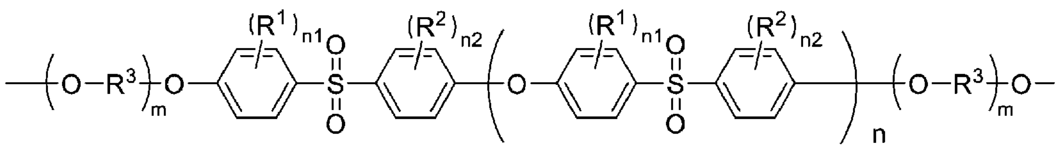

(I)

[In formula (I),

$R^1$, $R^2$, $R^3$, n1 and n2 have the same meanings as defined above in formula (1) and formula (2),
n represents an integer of 0 or more and m represents an integer of 1 or more, the plurality of $R^3$ groups may be the same or different from each other, and the plurality of m integers may be the same or different from each other.]

Here, n represents the number of repeating structural units of the aromatic polysulfone block (A) in the above formula (1).

Similarly, m represents the number of repeating structural units of the polyoxyalkylene block (B) in the above formula (I).

The block copolymer of the embodiment may be a block copolymer having at least one terminal OH group at

a main chain terminal, and including at least one of:

a linear block copolymer having at least three blocks of the polyoxyalkylene block (B) having a terminal OH group, the aromatic polysulfone block (A), and the polyoxyalkylene block (B) having a terminal OH group in this order, and
a linear block copolymer having at least two blocks of the polyoxyalkylene block (B) having a terminal OH group and the aromatic polysulfone block (A).

The block copolymer of the embodiment may be a block copolymer having at least one terminal OH group at a main chain terminal, and including at least one type of block copolymer selected from the group consisting of:

linear block copolymers having at least three blocks of the polyoxyalkylene block (B) having a terminal OH group, the aromatic polysulfone block (A), and the polyoxyalkylene block (B) having a terminal OH group in this order, and
linear block copolymers having at least two blocks of the polyoxyalkylene block (B) having a terminal OH group and the aromatic polysulfone block (A).

The block copolymer of the embodiment may be a block copolymer having at least one terminal OH group at a main chain terminal, and including at least one of:

a linear triblock copolymer having three blocks of the polyoxyalkylene block (B) having a terminal OH group, the aromatic polysulfone block (A), and the polyoxyalkylene block (B) having a terminal OH group in this order, and
a linear diblock copolymer having two blocks of the polyoxyalkylene block (B) having a terminal OH group and the aromatic polysulfone block (A).

The block copolymer of the embodiment may be a block copolymer having at least one terminal OH group at a main chain terminal, and including at least one type of block copolymer selected from the group consisting of:

linear triblock copolymers having three blocks of the polyoxyalkylene block (B) having a terminal OH group, the aromatic polysulfone block (A), and the polyoxyalkylene block (B) having a terminal OH group in this order, and
linear diblock copolymers having two blocks of the polyoxyalkylene block (B) having a terminal OH group and the aromatic polysulfone block (A).

Examples of linear triblock copolymers having three blocks of the polyoxyalkylene block (B) having a terminal OH group, the aromatic polysulfone block (A), and the polyoxyalkylene block (B) having a terminal OH group in this order include polymers represented by general formula (1-1) shown below.
Here, the case in which the aromatic polysulfone block (A) consists of a polymer chain having structural units represented by general formula (1) shown above, the polyoxyalkylene blocks (B) are each composed of a polymer chain having structural units represented by general formula (2) shown above, and the polyoxyalkylene blocks (B) have a terminal unit represented by general formula (2e) shown above is illustrated as one example.

[Chemical formula 12]

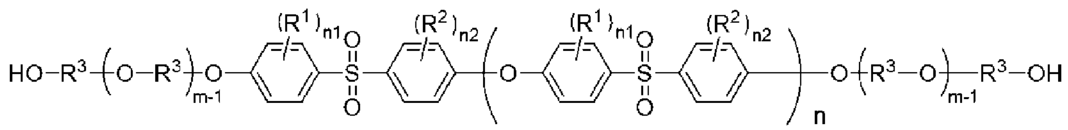

(I-1)

[In formula (I-1), $R^1$, $R^2$, $R^3$, n1, n2, n and m have the same meanings as defined above in formula (I).]
The ratio of the aromatic polysulfone block (A) and the polyoxyalkylene block (B) within the total mass (100% by mass) of the entire block copolymer of the embodiment may be 80% by mass or more but 100% by mass or less, may be 90% by mass or more but 100% by mass or less, may be 98% by mass or more but 100% by mass or less, or may be 100% by mass.
The block copolymer of the embodiment contains an aromatic polysulfone block (A) and a polyoxyalkylene block (B), wherein the block copolymer has at least one terminal OH group at a main chain terminal, and
the ratio of the number of the terminal OH groups per 100 units of the structural units constituting the aromatic polysulfone block (A) (terminal OH groups / 100 structural units of block (A)), calculated from peak areas of a spectrum acquired by

$^1H$-NMR measurement, is 0.43 or more but 2 or less.

In the block copolymer of the embodiment, the value of the above ratio (of terminal OH groups / 100 structural units of block (A)), within the above range of 0.43 or more but 2 or less, is preferably 1.5 or less, and more preferably 1 or less.

In a block copolymer of the embodiment, the numerical range for the aforementioned ratio (terminal OH groups / 100 structural units of block (A)) is 0.43 or more but 2 or less, and in one example is preferably 0.43 or more but 1.5 or less, and more preferably 0.43 or more but 1 or less.

The block copolymer of the embodiment contains an aromatic polysulfone block (A) and a polyoxyalkylene block (B), wherein the block copolymer has at least one terminal OH group at a main chain terminal, and the number of the terminal OH groups bonded to the polyoxyalkylene block (B) per 100 units of the structural units constituting the aromatic polysulfone block (A), calculated from peak areas of a spectrum acquired by $^1H$-NMR measurement, is preferably 0.43 or more but 2 or less, more preferably 0.43 or more but 1.5 or less, and even more preferably 0.43 or more but 1 or less.

The block copolymer of the embodiment contains an aromatic polysulfone block (A) and a polyoxyalkylene block (B), wherein the block copolymer has at least one terminal OH group at a main chain terminal,

the aromatic polysulfone block (A) is a polymer chain composed of structural units represented by general formula (1) shown above, and the polyoxyalkylene block (B) is a polymer chain composed of structural units represented by general formula (2) shown above, and

the number of the terminal OH groups bonded to the polyoxyalkylene block (B) per 100 units of the structural units constituting the aromatic polysulfone block (A), calculated from peak areas of a spectrum acquired by $^1H$-NMR measurement, is preferably 0.43 or more but 2 or less, more preferably 0.43 or more but 1.5 or less, and even more preferably 0.43 or more but 1 or less.

Provided the value for the above ratio (terminal OH groups / 100 structural units of block (A)) in the block copolymer of the embodiment falls within the above range, the fouling resistance of a separation membrane formed from the block copolymer improves. This improvement in the fouling resistance of the separation membrane can be confirmed by comparison with a separation membrane obtained from a comparative block copolymer having similar structural units, but in which the value of the above ratio falls outside the above range.

It is thought that the larger the number of terminal OH groups per 100 units of the structural units constituting the aromatic polysulfone block (A), calculated from peak areas of a spectrum acquired by $^1H$-NMR measurement, the more the hydrophilicity of the block copolymer of the embodiment increases. It is thought that this increase in hydrophilicity improves the fouling resistance as a result of an improvement in the water permeability of a separation membrane formed from the block copolymer, better suppression of the adhesion of substances that can cause blockages, and facilitation of the effects of cleaning.

On the other hand, as confirmed in the examples described below, if the number of these terminal OH groups is too large, then the fouling resistance actually deteriorates. Although the reasons for this observation are not entirely clear, it is thought to be related to a change in the hydration state of water molecules in the vicinity of the terminal OH groups and the block copolymer.

The number of the above terminal OH groups per 100 units of the structural units constituting the aromatic polysulfone block (A) is calculated from peak areas of a spectrum acquired by $^1H$-NMR measurement of the block copolymer. A more detailed description of this calculation method is presented below, using the case of a block copolymer in which the terminal OH groups are bonded to the polyoxyalkylene block (B) as an example.

(i) The peak area $Xp^{01}$ attributable to the known number of hydrogen atoms bonded to the aromatic ring in a structural unit of the aromatic polysulfone block (A) is determined by $^1H$-NMR measurement.

(ii) By dividing the peak area $Xp^{01}$ by the number of hydrogen atoms bonded to the aromatic ring, the number of structural units (number of units) can be calculated (for example, in the case where the peak area $Xp^{01}$ is the peak area attributable to four hydrogen atoms bonded to the aromatic ring of the aromatic polysulfone block (A), the peak area is divided by 4.)

(iii) The peak area $Yp^{01}$ attributable to the hydrogen atom of OH groups bonded to the alkylene chain in the polyoxyalkylene block (B) is determined by $^1H$-NMR measurement.

(iv) By dividing the peak area $Yp^{01}$ by the number of hydrogen atoms (one) in each OH group, the number of terminal OH groups can be calculated.

(v) By dividing the number of terminal OH groups determined in (iv) by the number of structural units (the number of units) determined in (ii), and then multiplying the result by 100 (100 units), the number of terminal OH groups per 100 units of the structural units constituting the aromatic polysulfone block (A) can be calculated.

For $Xp^{01}$, the integral from 7.25 to 7.27 ppm can be employed. For $Yp^{01}$, the integral from 4.53 to 4.60 ppm can be used.

Any solvent that enables the $^1$H-NMR measurement to be conducted and is capable of dissolving the block copolymer that represents the measurement target may be used as the measurement solvent for the $^1$H-NMR measurement, and deuterated dimethyl sulfoxide is ideal.

Examples of the $^1$H-NMR measurement conditions employed in the case where deuterated dimethyl sulfoxide is used as the measurement solvent include the conditions described below.

[Solution $^1$H-NMR Measurement Conditions]

Measurement apparatus: ECZ400s (manufactured by JEOL Ltd.)
Static magnetic field strength: 9.4 Tesla (resonance frequency: 400 MHz ($^1$H))
Spinning: 15 Hz
Repeat time: 7.2 s
Number of scans: 64
Temperature: 23°C
Chemical shift standard: dimethyl sulfoxide

In the block copolymer of the embodiment, the ratio represented by weight of polyoxyalkylene block (B) / weight of aromatic polysulfone block (A) is preferably 0.05 or more.

In the block copolymer of the embodiment, the ratio represented by weight of polyoxyalkylene block (B) / weight of aromatic polysulfone block (A) is preferably 0.2 or less, and more preferably 0.18 or less.

In the block copolymer of the embodiment, the numerical range for the ratio represented by weight of polyoxyalkylene block (B) / weight of aromatic polysulfone block (A) is preferably 0.05 or more but 0.2 or less, and more preferably 0.05 or more but 0.18 or less.

In the block copolymer of the embodiment, provided the value of the above ratio (weight of polyoxyalkylene block (B) / weight of aromatic polysulfone block (A)) is at least as large as the above lower limit, the fouling resistance of the obtained separation membrane improves, which is desirable. Provided the value of the above ratio (weight of polyoxyalkylene block (B) / weight of aromatic polysulfone block (A)) is not more than the above upper limit, gelling of the block copolymer is suppressed, facilitating production of the separation membrane, and the fouling resistance of the obtained separation membrane also tends to improves favorably.

Here, it is thought that the higher the value of the above ratio represented by weight of polyoxyalkylene block (B) / weight of aromatic polysulfone block (A) and the greater the weight proportion of the polyoxyalkylene block (B), the more the hydrophilicity of the block copolymer of the embodiment improves, contributing to an improvement in the fouling resistance of the obtained separation membrane, but there are no particular limitations on the value of the ratio.

As confirmed in the examples described below, differences are observed in the fouling resistance even for copolymers having similar PEG/PES weight ratios. It is thought that this suggests that the number of terminal OH groups per 100 units of the structural units constituting the aromatic polysulfone block (A) has a greater contribution to the improvement in the fouling resistance than the above weight ratio of [weight of block (B) / weight of block (A)].

The above weight of the aromatic polysulfone block (A) in a block copolymer of the embodiment is the sum of the weights of all the aromatic polysulfone blocks (A) included in the block copolymer of the embodiment.

Similarly, the weight of the polyoxyalkylene block (B) in a block copolymer of the embodiment is the sum of the weights of all the polyoxyalkylene blocks (B) included in the block copolymer of the embodiment.

In a block copolymer of the embodiment, the above value of weight of polyoxyalkylene block (B) / weight of aromatic polysulfone block (A) is calculated on the basis of a peak area ratio in a spectrum acquired by $^1$H-NMR measurement of the block copolymer. The specific calculation method is as follows.

<i> The peak area $Xp^{01}$ attributable to the known number of hydrogen atoms bonded to the aromatic ring in a structural unit of the aromatic polysulfone block (A) is determined by $^1$H-NMR measurement.
<ii> The peak area $Zp^{01}$ attributable to the known number of hydrogen atoms bonded to the alkylene chain in a structural unit of the polyoxyalkylene block (B) is determined by $^1$H-NMR measurement.
<iii> By multiplying the peak area $Zp^{01}$ determined in <ii> by the molecular weight of a structural unit of the polyoxyalkylene block (B), and dividing the resulting value by the value obtained by multiplying the peak area $Xp^{01}$ determined in <i> by the molecular weight of a structural unit of the aromatic polysulfone block (A), the value of weight of polyoxyalkylene block (B) / weight of aromatic polysulfone block (A) can be calculated.

For $Xp^{01}$, the integral from 7.25 to 7.27 ppm can be employed. Further, for $Zp^{01}$, the integral from 3.4 to 3.6 ppm can be used.

In one example, the weight average molecular weight (Mw) of a block copolymer of the embodiment may be 20,000 or more, 30,000 or more, or 40,500 or more.

In one example, the weight average molecular weight (Mw) of a block copolymer of the embodiment may be 150,000 or less, 130,000 or less, or 100,000 or less.

In one example, the numerical range for the weight average molecular weight (Mw) of a block copolymer of the embodiment may be from 20,000 to 150,000, from 30,000 to 130,000, or from 40,500 to 100,000.

In this description, the weight average molecular weight (Mw) describes the weight average molecular weight measured by gel permeation chromatography (GPC), and is determined under the measurement conditions described below.

[Measurement Conditions]

Sample: 0.002 g of the block copolymer of the measurement target was added to 1 mL of an N,N-dimethylformamide solution containing 10 mM of lithium bromide
Sample injection volume: 100 μL
Columns (stationary phase): two TSKgel GMHHR-H columns (7.8 mmø × 300 mm) manufactured by Tosoh Corporation connected in series
Column temperature: 40°C
Eluent (mobile phase): N,N-dimethylformamide solution containing 10 mM of lithium bromide
Flow rate: 0.8 mL/minute
Detector: differential refractometer (RI) and light scattering photometer (LS)
Molecular weight calculation method: molecular weight calculated from measurement result from light scattering photometer (LS) (molecular weight calculated using sample dn/dc value of 0.187)

In the block copolymer of the embodiment, it is possible that unintended degradation of the copolymer or retention of residual unreacted raw materials sometimes result in the incorporation of trace amounts of polymers not containing the aromatic polysulfone block (A) and the polyoxyalkylene block (B). In such cases, the prescriptions described above relating to the block copolymer (for example, the number of terminal OH groups, the proportions of specific structural units, the weight ratio of [weight of block (B) / weight of block (A)], and the weight average molecular weight) may be determined using the resin composition containing the block copolymer of the embodiment. In that resin composition, the amount of the block copolymer containing the aromatic polysulfone block (A) and the polyoxyalkylene block (B), relative to the total mass of the resin composition, may be 95% by mass or more but 100% by mass or less, or may be 98% by mass or more but 100% by mass or less.

The block copolymer of the embodiment is ideal as a material for forming a separation membrane, and a separation membrane formed from the block copolymer exhibits excellent performance as a separation membrane, with good resistance to fouling.

«Molded Body»

A molded body of the embodiment contains the block copolymer of the embodiment. The molded body of the embodiment is molded from the block copolymer of the embodiment.

The molded body of the embodiment can be produced using the block copolymer of the embodiment as the molding material.

The amount of the block copolymer of the embodiment relative to the total mass of the molded body of the embodiment may be, for example, from 50 to 100% by mass, from 80 to 99.5% by mass, or from 90 to 99% by mass.

Examples of the method for producing the molded body include methods having a step of molding the block copolymer of the embodiment into a desired shape.

Examples of the molding method include methods in which a material containing the block copolymer of the embodiment is molded by a solution casting method, extrusion molding, T-die molding, blow molding, or injection molding or the like. By selecting the molding method in accordance with the desired shape and the like of the molded body, the block copolymer of the embodiment can be molded into various shapes.

One example of a molded body of the embodiment is a film containing a block copolymer of the embodiment. The film is preferably a porous membrane. The film is preferably a porous membrane having water permeability that can be provided as a separation membrane or semipermeable membrane.

The molded body of the embodiment can be used as a separation membrane or semipermeable membrane having water permeability. The molded body of the embodiment has water permeability and can be used as a separation membrane or semipermeable membrane that allows passage of a fluid containing a protein.

Although there are no particular limitations on the thickness of the film of the embodiment, the thickness may be, for example, from 5 to 200 μm, from 7 to 100 μm, or from 10 to 50 μm.

<<Method for Producing Block Copolymer>>

There are no particular limitations on the method used for producing the block copolymer of the embodiment, but one embodiment of the method for producing the block copolymer is described below.

The method for producing the block copolymer of the embodiment may include a step (a block copolymer production step) of reacting an aromatic polysulfone (a) having at least one Cl atom at a terminal, and a polyoxyalkylene compound (b) having a hydroxyl group at a terminal.

The method for producing the block copolymer of the embodiment may also include a step of preparing the aromatic polysulfone (a), with the intention of subsequently reacting the polymerized aromatic polysulfone (a) with the polyoxyalkylene compound (b).

The method for producing the block copolymer of the embodiment may include a step of preparing an aromatic polysulfone (a) having at least one Cl atom at a terminal, and

a step (a block copolymer production step) of reacting the aromatic polysulfone (a) and a polyoxyalkylene compound (b) having a hydroxyl group at a terminal.

The step of preparing the aromatic polysulfone (a) may be any step that yields the aromatic polysulfone (a), and includes simply obtaining a commercially available aromatic polysulfone (a).

Alternatively, the method for producing the block copolymer of the embodiment may also include a step of producing the aromatic polysulfone (a) (an aromatic polysulfone production step).

The method for producing the block copolymer of the embodiment may include a step of obtaining, via a polycondensation reaction, an aromatic polysulfone (a) having at least one Cl atom at a terminal, and

a step (a block copolymer production step) of reacting the aromatic polysulfone (a) and a polyoxyalkylene compound (b) having a hydroxyl group at a terminal.

As one example of the aromatic polysulfone (a), a compound represented by general formula (a-1) shown below can be obtained by conducting a polycondensation reaction of a compound represented by general formula (a1) shown below and a compound represented by general formula (a2) shown below.

[Chemical formula 13]

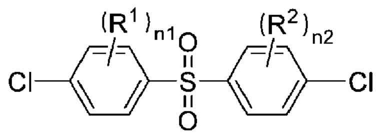

(a 1)

[In formula (al), $R^1$, $R^2$, n1 and n2 have the same meanings as defined above in formula (1).]

[Chemical formula 14]

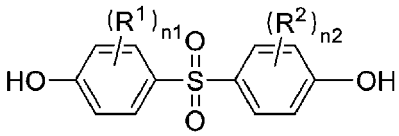

(a 2)

[In formula (a2), $R^1$, $R^2$, n1 and n2 have the same meanings as defined above in formula (1).]

Examples of the aromatic polysulfone (a) obtained in the above polycondensation reaction include compounds represented by general formula (a-1) shown below.

[Chemical formula 15]

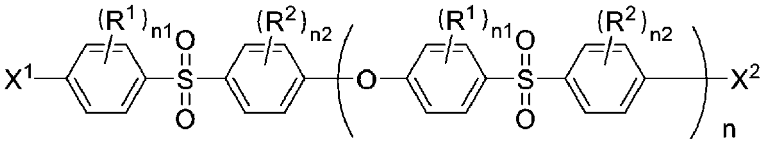

(a − 1)

[In formula (a-1), $R^1$, $R^2$, n1, n2 and n have the same meanings as defined above in formula (1), and $-X^1$ and $-X^2$ each independently represent -OH or -Cl, provided that at least one of $-X^1$ and $-X^2$ represents -Cl.]

Further, n represents the number of repeating units of the structural unit of the aromatic polysulfone (a-1).

In the reaction between the aromatic polysulfone (a) and the polyoxyalkylene compound (b), examples of the aromatic polysulfone (a) include the compounds described above.

The value for the weight average molecular weight of the aromatic polysulfone (a) used as a raw material may be selected appropriately in accordance with the desired weight average molecular weight of the block copolymer being produced.

The weight average molecular weight of the aromatic polysulfone (a) used as a raw material, measured in a DMF solvent by gel permeation chromatography, may be 20,000 or more, may be 20,000 or more but 70,000 or less, or may be 20,000 or more but 65,000 or less.

Examples of the polyoxyalkylene compound (b) include compounds represented by general formula (b-1) shown below.

[Chemical formula 16]

$$HO{-}\!\left(R^3{-}O\right)_m\!{-}H \qquad (b-1)$$

[In formula (b-1), $R^3$ and m have the same meanings as defined above in formula (I).]

The value for the weight average molecular weight of the polyoxyalkylene compound (b) used as a raw material may be determined as appropriate.

The weight average molecular weight of the polyoxyalkylene compound (b) used as a raw material may be 2,000 or more, may be 2,000 or more but 20,000 or less, or may be 2,000 or more but 10,000 or less.

One example of the reaction between the aromatic polysulfone (a) and the polyoxyalkylene compound (b) is a reaction between a compound represented by general formula (a-1) and a compound represented by formula (b-1). That reaction can be represented by the following reaction formula. In one example of this reaction, a block copolymer represented by general formula (1-1) is obtained.

[Chemical formula 17]

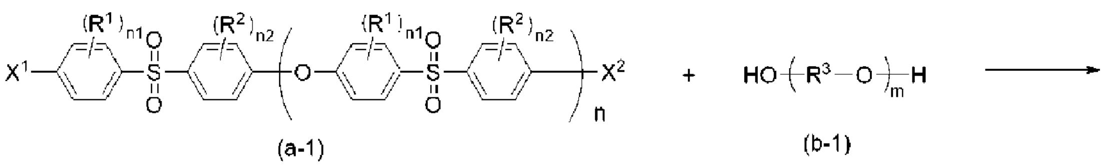

(a-1) (b-1)

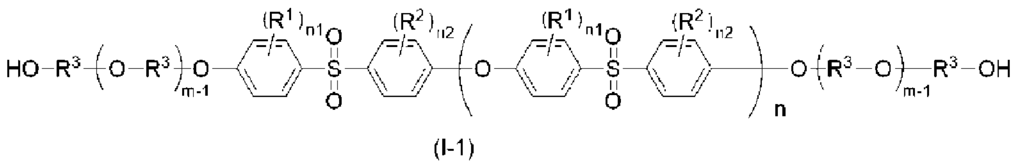

(I-1)

[In the formula, $R^1$, $R^2$, $R^3$, n1, n2, n, m, $X^1$ and $X^2$ have the same meanings as defined above in formula (a-1), formula (b-1) and formula (1-1).]

A single aromatic polysulfone (a) may be used alone, or a combination of two or more aromatic polysulfones (a) may be used.

A single polyoxyalkylene compound (b) may be used alone, or a combination of two or more polyoxyalkylene compounds (b) may be used.

The amount used of the polyoxyalkylene compound (b) having a terminal hydroxyl group, per 1 mol of the aromatic polysulfone (a) having at least one Cl atom at a terminal, is preferably 1 mol or more, more preferably from 1 to 2.5 mol, and even more preferably from 1 to 2 mol. Provided the amount falls within this range, a linear triblock copolymer or linear diblock copolymer of the type described above can be more easily obtained, and the amount of terminal OH groups can be more easily controlled, both of which are desirable.

Here, the aromatic polysulfone (a) having at least one Cl atom at a terminal is preferably a compound represented by general formula (a-1) shown above. The polyoxyalkylene compound (b) having a terminal hydroxyl group is preferably a compound represented by general formula (b-1) shown above.

The reaction between the aromatic polysulfone (a) and the polyoxyalkylene compound (b) is preferably conducted using an alkali metal carbonate and/or an alkali metal bicarbonate as a catalytic base. Further, the reaction is preferably conducted using an organic solvent as the solvent, and is more preferably conducted in an organic solvent using an alkali metal carbonate as a base.

The alkali metal carbonate may be a true alkali carbonate (a carbonate salt of an alkali metal), may be a more acidic alkali bicarbonate (an alkali hydrogen carbonate, a hydrogen carbonate salt of an alkali metal), or may be a mixture of these salts (an alkali carbonate and an alkali bicarbonate). Examples of preferred alkali carbonates include sodium carbonate and potassium carbonate. Examples of preferred alkali bicarbonates include sodium bicarbonate (sodium hydrogen carbonate) and potassium bicarbonate (potassium hydrogen carbonate) and the like.

The blend ratio of the alkali metal carbonate, expressed as the amount of alkali metal per 1 mol of the polyoxyalkylene compound (b), is preferably 0.90 mol or more but 1.30 mol or less, and is more preferably 0.95 mol or more but 1.20 mol or less.

Examples of the organic solvent include aprotic polar solvents, and the boiling point at one atmosphere of the aprotic polar solvent is preferably 250°C or lower. By using an aprotic polar solvent with a boiling point of 250°C or lower, the reaction can be conducted under reflux of the aprotic polar solvent at a comparatively low temperature while byproducts are removed.

The boiling point of the aprotic polar solvent is preferably 250°C or lower, and may be 230°C or lower, or 210°C of lower. The boiling point of the aprotic polar solvent may be 120°C or higher, 140°C or higher, or 150°C or higher.

Examples of the numerical range for the boiling point of the aprotic polar solvent may be 120°C or higher but 230°C of lower, 140°C or higher but 210°C or lower, or 150°C or higher but 210°C or lower.

Examples of aprotic polar solvents having a boiling point of 250°C or lower include sulfone-based solvents such as dimethyl sulfone and diethyl sulfone, amidebased solvents such as N,N-dimethylacetamide, N-methylpyrrolidone, N-ethylpyrrolidone, N-methylcaprolactam, N,N-dimethylformamide, N,N-diethylformamide, N,N-diethylacetamide, N-methylpropionamide and dimethylimidazoldinone, lactone-based solvents such as γ-butyrolactone and β-butyrolactone, sulfoxide-based solvents such as methyl sulfoxide and methyl phenyl sulfoxide, cellosolve-based solvents such as tetramethyl phosphoramide and hexamethyl phosphoramide, and cellosolve-based solvents such as ethyl cellosolve acetate and methyl cellosolve acetate.

In the reaction between the aromatic polysulfone (a) and the polyoxyalkylene compound (b), water is sometimes produced as a by-product, and in some cases a "solvent that forms an azeotropic mixture with water" may be added to the solvent for the purpose of removing that water.

However, in the production method of the embodiment, the proportion of solvent that forms an azeotropic mixture with water relative to the total mass of solvent used in the reaction between the aromatic polysulfone (a) and the polyoxyalkylene compound (b) is preferably from 0 to 20% by mass, more preferably from 0 to 10% by mass, and even more preferably from 0 to 3% by mass, and the case in which the solvent used in the reaction contains substantially no solvent that forms an azeotropic mixture with water is particularly desirable.

By reducing the amount of solvent that forms an azeotropic mixture with water in the reaction between the aromatic polysulfone (a) and the polyoxyalkylene compound (b), the molecular weight of the produced block copolymer can be increased.

The boiling point of the solvent that forms an azeotropic mixture with water is preferably 250°C or lower, and may be 230°C or lower, or 210°C or lower. The boiling point of the solvent that forms an azeotropic mixture with water may be 40°C or higher, 80°C or higher, or 100°C or higher.

Examples of the numerical range for the boiling point of the solvent that forms an azeotropic mixture with water may be 40°C or higher but 250°C or lower, 80°C or higher but 230°C or lower, or 100°C or higher but 210°C or lower.

Specific examples of solvents that form an azeotropic mixture with water and have a boiling point of 250°C or lower include benzene, chlorobenzene, toluene, xylene, ethylbenzene, methyl isobutyl ketone, hexane and cyclohexane.

The reaction between the aromatic polysulfone (a) and the polyoxyalkylene compound (b) is preferably conducted at a temperature of 250°C or lower. By conducting the reaction at a comparatively low temperature of 250°C or lower, the energy requirement can be kept low. The reaction temperature is preferably 250°C or lower, and may be

230°C or lower, or 210°C or lower. There are no limitations on the lower limit for the reaction temperature, which may be 100°C or higher, 120°C or higher, or 140°C or higher.

Examples of the numerical range for the reaction temperature between the aromatic polysulfone (a) and the polyoxyalkylene compound (b) may be 100°C or higher but 250°C or lower, 120°C or higher but 230°C or lower, or 140°C or higher but 210°C or lower.

Subsequently, unreacted base, by-products (alkali halides when an alkali metal salt is used as the base), and the organic solvent are removed by filtration, extraction or centrifugal separation or the like from the reaction mixture obtained from the reaction between the aromatic polysulfone (a) and the polyoxyalkylene compound (b), thereby isolating the block copolymer from the reaction mixture.

Removal of the organic solvent may be conducted by removing the organic solvent directly from the reaction solution by distillation, or the solution may be mixed with a poor solvent for the block copolymer to precipitate the block copolymer, with the block copolymer then being separated by filtration or centrifugal separation or the like. A prescribed amount of residual organic solvent may be retained.

Examples of poor solvents for the block copolymer include methanol, ethanol, 2-propanol, acetone, hexane, heptane and water, and water or methanol is preferred in terms of being inexpensive.

In the embodiment, a single poor solvent for the block copolymer may be used alone, or a mixture of two or more such solvents may be used.

## Examples

Next, the present invention is described in further detail using a series of examples, but the present invention is not limited to the following examples.

### <Measurement of Mw of Block Copolymers>

The weight average molecular weight (Mw) of each block copolymer was determined by GPC measurement. Each Mw value was measured twice, and the average of the two values was recorded.

### [Measurement Conditions]

Sample: 0.002 g of the block copolymer of the measurement target was added to 1 mL of an N,N-dimethylformamide solution containing 10 mM of lithium bromide
Sample injection volume: 100 μL
Columns (stationary phase): two TSKgel GMHHR-H columns (7.8 mmø × 300 mm) manufactured by Tosoh Corporation connected in series
Column temperature: 40°C
Eluent (mobile phase): N,N-dimethylformamide solution containing 10 mM of lithium bromide
Flow rate: 0.8 mL/minute
Detector: differential refractometer (RI) and light scattering photometer (LS)
Molecular weight calculation method: molecular weight calculated from measurement result from light scattering photometer (LS) (molecular weight calculated using sample dn/dc value of 0.187)

### <Solution $^1$H-NMR Measurement>

Solution $^1$H-NMR measurements were conducted using samples prepared by dissolving the block copolymers from each example in deuterated dimethyl sulfoxide in sufficient amount to generate a concentration of the block copolymer of the measurement target of 80 mg/mL. The measurement conditions were as follows.

### [Measurement Conditions]

Measurement apparatus: ECZ400s (manufactured by JEOL Ltd.)
Static magnetic field strength: 9.4 Tesla (resonance frequency: 400 MHz ($^1$H))
Spinning: 15 Hz
Repeat time: 7.2 s

Number of scans: 64
Temperature: 23°C
Chemical shift standard: dimethyl sulfoxide

<Calculation of weight of polyoxyalkylene block (B) / weight of aromatic polysulfone block (A)>

Using the spectrum measured above in the section entitled <Solution $^1$H-NMR Measurement>, the peak area ($Xp^{01}$) attributable to the single hydrogen atoms bonded to each of the two carbon atoms adjacent to the carbon atom of $ph^1$ bonded to S and the single hydrogen atoms bonded to each of the two carbon atoms adjacent to the carbon atom of $ph^2$ bonded to S (a total of 4 hydrogen atoms) within the structural unit ($-ph^1-SO_2-ph^2-O-$) that constitutes the aromatic polysulfone block (A), and the peak area ($Zp^{01}$) attributable to the hydrogen atoms (a total of 4 hydrogen atoms) bonded to the carbon atoms of the structural unit ($-CH_2-CH_2-O-$) that constitutes the polyoxyalkylene block (B) were each multiplied by the molecular weight of the respective repeating unit, and a calculation was then performed based on formula (m2) shown below.
Calculation of weight of Polyoxyalkylene block (B) / weight of aromatic polysulfone block

$$(A) = (Zp^{01} \times 44) / (Xp^{01} \times 232) \qquad ... (m2)$$

For $Xp^{01}$, the integral from 7.25 to 7.27 ppm was used. Further, for $Zp^{01}$, the integral from 3.4 to 3.6 ppm was used.

<Calculation of number of terminal OH groups bonded to the polyoxyalkylene block (B) per 100 units of the structural units constituting the aromatic polysulfone block (A)>

In the block copolymer, the number of terminal OH groups ($A^{01}$) bonded to the polyoxyalkylene block (B) per 100 units of the structural units constituting the aromatic polysulfone block (A) was calculated by NMR measurement.
Specifically, using the spectrum measured above in the section entitled <Solution $^1$ H-NMR Measurement>, the peak area ($Xp^{01}$) attributable to the single hydrogen atoms bonded to each of the two carbon atoms adjacent to the carbon atom of $ph^1$ bonded to S and the single hydrogen atoms bonded to each of the two carbon atoms adjacent to the carbon atom of $ph^2$ bonded to S (a total of 4 hydrogen atoms) within the structural unit ($-ph^1-SO_2-ph^2-O-$) that constitutes the aromatic polysulfone block (A), and the peak area ($Yp^{01}$) attributable to the hydrogen atom of the OH groups bonded to the polyoxyalkylene block (B) were used to perform a calculation based on formula (m1) shown below.

$$A^{01} = Yp^{01} / (Xp^{01}/4) \times 100$$

$$= Yp^{01} / Xp^{01} \times 400 \qquad ... (m1)$$

For $Xp^{01}$, the integral from 7.25 to 7.27 ppm was used. Further, for $Yp^{01}$, the integral from 4.53 to 4.60 ppm was used.

<Production of Block Copolymers>

[Example 1]

In a polymerization tank fitted with a stirrer, a nitrogen inlet tube, a thermometer, and a condenser with a receiver at the tip, 69.5 g of polyethylene glycol 8000 (manufactured by Tokyo Chemical Industry Co., Ltd., weight average molecular weight: 9,100) (approximately 2 molar equivalents per 1 mol of PES), 0.92 g of potassium carbonate and 150 g of N-methyl-2-pyrrolidone (NMP) were mixed together, and after raising the temperature to 100°C, 100 g of a polyethersulfone (manufactured by Sumitomo Chemical Co., Ltd., SUMIKAEXCEL PES 3600P, weight average molecular weight measured by gel permeation chromatography in DMF solvent: 20,000 or higher) was added. Following dissolution of the polyethersulfone, the temperature was raised to 200°C, and a reaction was conducted for 14 hours. Subsequently, the resulting reaction mixture solution was diluted with NMP and cooled to room temperature, and unreacted potassium carbonate and by-product potassium chloride were precipitated. The solution was then added dropwise to water to precipitate the aromatic polysulfone, and the precipitate was collected by removing unnecessary NMP by filtration.
The thus obtained precipitate was washed carefully and repeatedly with methanol and water, and then dried by heating at 100°C, yielding an aromatic polysulfone block copolymer of Example 1 having a polyethylene glycol block.

[Example 2]

With the exception of replacing the polyethylene glycol used in Example 1 with 17.4 g of polyethylene glycol 4000 (manufactured by Tokyo Chemical Industry Co., Ltd., weight average molecular weight: 3,000) (approximately 1 molar equivalent per 1 mol of PES), the same procedure as Example 1 was used to obtain an aromatic polysulfone block copolymer of Example 2.

[Example 3]

With the exceptions of replacing the polyethylene glycol used in Example 1 with 11.0 g of polyethylene glycol 4000 (manufactured by Tokyo Chemical Industry Co., Ltd., weight average molecular weight: 3,000) (approximately 2 molar equivalents per 1 mol of PES), adjusting the amount of potassium carbonate used to 0.46 g, and replacing the polyether sulfone with 100 g of a different polyethersulfone (manufactured by Sumitomo Chemical Co., Ltd., SUMIKAEXCEL PES 5900P, weight average molecular weight measured by gel permeation chromatography in DMF solvent: 30,000 or higher), the same procedure as Example 1 was used to obtain an aromatic polysulfone block copolymer of Example 3.

[Example 4]

With the exceptions of replacing the polyethylene glycol used in Example 1 with 10.4 g of polyethylene glycol 2000 (manufactured by Tokyo Chemical Industry Co., Ltd., weight average molecular weight: 2,100) (approximately 2 molar equivalents per 1 mol of PES), adjusting the amount of potassium carbonate used to 0.46 g, and replacing the polyether sulfone with 100 g of another polyethersulfone (manufactured by Sumitomo Chemical Co., Ltd., SUMIKAEXCEL PES 4800P, weight average molecular weight measured by gel permeation chromatography in DMF solvent: 25,000 or higher), the same procedure as Example 1 was used to obtain an aromatic polysulfone block copolymer of Example 4.

[Comparative Example 1]

In a polymerization tank fitted with a stirrer, a nitrogen inlet tube, a thermometer, and a condenser with a receiver at the tip, 107.6 g of polyethylene glycol 8000 (manufactured by Tokyo Chemical Industry Co., Ltd., weight average molecular weight: 9,100) (approximately 3 molar equivalents per 1 mol of PES), 1.43 g of potassium carbonate, 1.4 g of 4,4'-dichlorodiphenylsulfone (DCDPS) and 120 g of N-methyl-2-pyrrolidone (NMP) were mixed together, and after raising the temperature to 100°C, 80 g of a polyethersulfone (manufactured by Sumitomo Chemical Co., Ltd., SUMIKAEXCEL PES 3600P, weight average molecular weight measured by gel permeation chromatography in DMF solvent: 20,000 or higher) was added. Following dissolution of the polyethersulfone, the temperature was raised to 200°C, and a reaction was conducted for 14 hours. Subsequently, the resulting reaction mixture solution was diluted with NMP and cooled to room temperature, and unreacted potassium carbonate and by-product potassium chloride were precipitated. The solution was then added dropwise to water to precipitate the aromatic polysulfone, and the precipitate was collected by removing unnecessary NMP by filtration.

The thus obtained precipitate was washed carefully and repeatedly with methanol and water, and then dried by heating at 100°C, yielding an aromatic polysulfone block copolymer of Comparative Example 1.

[Comparative Example 2]

In a polymerization tank fitted with a stirrer, a nitrogen inlet tube, a thermometer, and a condenser with a receiver at the tip, 81.79 g of 4,4'-dichlorodiphenylsulfone (DCDPS), 67.71 g of 4,4'-dihydroxydiphenylsulfone (DHDPS), 29.20 g of polyethylene glycol 2000 (manufactured by Tokyo Chemical Industry Co., Ltd., weight average molecular weight: 2,100), and 41.34 g of potassium carbonate were suspended in 150 mL of NMP under a nitrogen atmosphere. This batch was heated to 190°C within a period of one hour, and then reacted for 10 hours. Subsequently, the resulting reaction mixture solution was diluted with NMP and cooled to room temperature, and unreacted potassium carbonate and by-product potassium chloride were precipitated. The solution was then added dropwise to water to precipitate the aromatic polysulfone, and the precipitate was collected by removing unnecessary NMP by filtration.

The thus obtained precipitate was washed carefully and repeatedly with methanol and water, and then dried by heating at 100°C, yielding an aromatic polysulfone block copolymer of Comparative Example 2.

For the aromatic polysulfone block copolymer of each example, the results of the above measurements are shown in Table 1.

[Table 1]

| | | Example 1 | Example 2 | Example 3 | Example 4 | Comparative Example 1 | | Comparative Example 2 |
|---|---|---|---|---|---|---|---|---|
| Raw materials | PES type | 3600P | 3600P | 5900P | 4800P | 3600P | DCDPS (g) | 81.79 |
| | PES (g) | 100 | 100 | 100 | 100 | 80 | DHDPS (g) | 67.71 |
| | PEG type | PEG 8000 | PEG 4000 | PEG 4000 | PEG 2000 | PEG 8000 | PEG type | PEG 2000 |
| | PEG (g) | 69.5 | 17.4 | 11.0 | 10.4 | 107.6 | PEG (g) | 29.20 |
| | DCDPS (g) | - | - | - | - | 1.4 | | |
| Block copolymer | Mw (GPC) | 80,200 | 43,000 | 45,300 | 42,000 | 50,500 | Mw (GPC) | 25,500 |
| | PEG/PES weight ratio | 0.18 | 0.13 | 0.090 | 0.050 | 0.30 | PEG/PES weight ratio | 0.23 |
| | Number of terminal PEG-OH groups per 100 PES units | 0.69 | 0.80 | 0.43 | 0.71 | 2.42 | Number of terminal PEG-OH groups per 100 PES units | 0 |
| Porous membrane | Water permeation rate Rate or recovery (%) | 42 | 34 | 37 | 37 | 28 | Water permeation rate Rate or recovery (%) | 28 |

<Production of Porous Membranes>

Using the aromatic polysulfone block copolymers of each of the examples described above and the aromatic polysulfone block copolymers of each of the comparative examples, 18% by mass of the block copolymer was mixed with 82% by mass of NMP inside a heated container, and the resulting mixture was stirred at 80°C for two hours, yielding a light yellow solution. Each of these solutions was applied to one surface of a glass plate of thickness 3 mm using a film applicator, and the glass plate was then immersed in water, forming a porous membrane with a membrane thickness of 140 to 170 μm formed from the aromatic polysulfone block copolymer of the example or comparative example.

The porous membrane of each example was detached from the glass plate, washed multiple times with water, and then stored in water until measurements were commenced.

<Evaluation of Fouling Resistance>

Using a pressure cell with a diameter of 47 mm, the porous membrane of each example was cut to a circular shape to prepare a test membrane for the example that could be mounted within the pressure cell. The test membrane of each example was mounted in the pressure cell, pure water was then filtered through the test membrane at 23°C under a pressure of 0.2 bar (20 kPa), and the amount of pure water passing through the test membrane during the period (of 30 seconds) from the point where 9 minutes 30 seconds had elapsed since commencing the filtration to the point where 10 minutes had elapsed was measured to determine the water permeation rate ($J_0$).

Next, using the test membrane of each example, an aqueous solution of bovine serum albumin (100 ppm) was filtered through the membrane at 23°C and the same pressure of pressure of 0.2 bar (20 kPa) for one hour. Subsequently, the test membrane of each example was inverted, and pure water was filtered through the membrane at 23°C and 0.1 bar (10 kPa) for two minutes to wash the membrane. The test membrane of each example was then once again inverted, pure water was filtered through the test membrane at 23°C under a pressure of 0.2 bar (20 kPa), and the amount of pure water passing through the test membrane during the period (of 30 seconds) from the point where 9 minutes 30 seconds had elapsed since commencing the filtration to the point where 10 minutes had elapsed was measured to determine the water permeation rate (J).

Based on the obtained water permeation rate ($J_0$) and the water permeation rate (J), the rate of recovery (%) for the water permeation rate for the test membrane of each example was calculated using the formula below. The results are shown in Table 1.

A higher value for the rate of recovery for the water permeation rate means superior fouling resistance.

$$\text{Rate of recovery (\%) for water permeation rate} = (J/J_0) \times 100$$

$J_0$: water permeation rate ($L/m^2/h/10^5$ Pa) prior to bovine serum albumin filtration
J: water permeation rate ($L/m^2/h/10^5$ Pa) following bovine serum albumin filtration

Based on the results shown in Table 1, it is evident that the porous membranes produced using, as molding materials, the aromatic polysulfone block copolymers of Examples 1 to 4 for which the number of terminal OH groups bonded to the polyoxyalkylene block (B) per 100 units of the structural units constituting the aromatic polysulfone block (A) is 0.43 or more but 2 or less exhibited improved fouling resistance compared with the porous membranes produced using the aromatic polysulfone block copolymers of Comparative Examples 1 and 2 which did not satisfy this numerical range as molding materials. This indicates that the aromatic polysulfone block copolymer according to the present invention is useful as a material for forming separation membranes.

The various compositions and combinations and the like described in each of the embodiments are merely examples, and additions, omissions, substitution and other changes to these compositions are possible without departing from the scope of the present invention. Further, the present invention is in no way limited by the various embodiments, and is limited only by the scope of the claims.

## Claims

**1.** A block copolymer comprising an aromatic polysulfone block (A) and a polyoxyalkylene block (B), wherein

the block copolymer has at least one terminal OH group at a main chain terminal, and
the number of the terminal OH groups per 100 units of structural units constituting the aromatic polysulfone block (A), calculated from peak areas of a spectrum acquired by $^1$H-NMR measurement, is 0.43 or more but 2

or less.

2. The block copolymer according to Claim 1, wherein the number of the terminal OH groups bonded to the polyoxyalkylene block (B) per 100 units of structural units constituting the aromatic polysulfone block (A), calculated from peak areas of a spectrum acquired by $^1$H-NMR measurement, is 0.43 or more but 2 or less.

3. The block copolymer according to Claim 1 or 2, wherein a ratio represented by weight of the polyoxyalkylene block (B) / weight of the aromatic polysulfone block (A) is 0.05 or more.

4. The block copolymer according to any one of Claims 1 to 3, wherein the aromatic polysulfone block (A) consists of a polymer chain having structural units represented by general formula (1) shown below:

[Chemical formula 1]

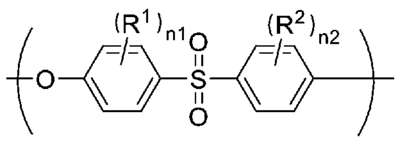

(1)

[wherein in formula (1),

$R^1$ and $R^2$ each independently represent an alkyl group having 1 to 10 carbon atoms, an aryl group having 6 to 20 carbon atoms, or a halogen atom,
n1 and n2 each independently represent an integer of 0 to 4, and
when n1 or n2 is 2 or more, a plurality of $R^1$ or $R^2$ groups in the aromatic polysulfone block (A) may be the same or different from each other].

5. The block copolymer according to any one of Claims 1 to 4, wherein the polyoxyalkylene block (B) consists of a polymer chain having structural units represented by general formula (2) shown below, and
the polyoxyalkylene block (B) has a terminal unit represented by general formula (2e) shown below:

[Chemical formula 2]

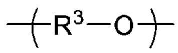

(2)

[wherein in formula (2), $R^3$ represents an alkylene group having 2 to 6 carbon atoms]

[Chemical formula 3]

$*-R^3-OH$ (2e)

[wherein in formula (2e), $R^3$ represents an alkylene group having 2 to 6 carbon atoms, and * indicates a bonding site].

6. The block copolymer according to Claim 5, wherein the polyoxyalkylene block (B) consists of a polymer chain having structural units represented by formula (2-1) shown below, and
the polyoxyalkylene block (B) has a terminal unit represented by general formula (2-1e) shown below:

[Chemical formula 4]

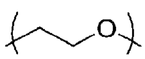

(2-1)

[Chemical formula 5]

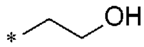 (2-1e)

[wherein in formula (2-1e), * indicates a bonding site].

**7.** The block copolymer according to any one of Claims 1 to 6, having a weight average molecular weight from 20,000 to 150,000.

**8.** The block copolymer according to any one of Claims 1 to 7, which is at least one type of block copolymer selected from the group consisting of:

a linear triblock copolymer having three blocks of the polyoxyalkylene block (B) having the terminal OH group, the aromatic polysulfone block (A), and the polyoxyalkylene block (B) having the terminal OH group in this order, and
a linear diblock copolymer having two blocks of the polyoxyalkylene block (B) having the terminal OH group and the aromatic polysulfone block (A).

**9.** The block copolymer according to any one of Claims 1 to 8, wherein a ratio of the aromatic polysulfone block (A) and the polyoxyalkylene block (B) within a total mass (100% by mass) of the block copolymer is 80% by mass or more but 100% by mass or less.

**INTERNATIONAL SEARCH REPORT**

International application No. **PCT/JP2022/033206**

**A. CLASSIFICATION OF SUBJECT MATTER**

***C08G 65/40***(2006.01)i; ***C08G 81/00***(2006.01)i
FI: C08G65/40; C08G81/00

According to International Patent Classification (IPC) or to both national classification and IPC

**B. FIELDS SEARCHED**

Minimum documentation searched (classification system followed by classification symbols)

C08G65/40; C08G81/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2010-58096 A (TORAY INDUSTRIES, INC.) 18 March 2010 (2010-03-18) claims, paragraph [0007], examples | 1-9 |
| A | US 5911880 A (RESEARCH CORPORATION TECHNOLOGIES INC.) 15 June 1999 (1999-06-15) entire text | 1-9 |
| A | JP 2016-522849 A (BASF SE) 04 August 2016 (2016-08-04) entire text | 1-9 |
| P, A | WO 2021/182342 A1 (SUMITOMO CHEMICAL CO., LTD.) 16 September 2021 (2021-09-16) entire text | 1-9 |
| P, A | WO 2021/182348 A1 (SUMITOMO CHEMICAL CO., LTD.) 16 September 2021 (2021-09-16) entire text | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/033206**

| Patent document cited in search report | Publication date (day/month/year) | Patent family member(s) | Publication date (day/month/year) |
| --- | --- | --- | --- |
| JP 2010-58096 A | 18 March 2010 | (Family: none) | |
| US 5911880 A | 15 June 1999 | (Family: none) | |
| JP 2016-522849 A | 04 August 2016 | US 2016/0108178 A1<br>entire text<br>EP 2992038 A2<br>CN 105377952 A | |
| WO 2021/182342 A1 | 16 September 2021 | (Family: none) | |
| WO 2021/182348 A1 | 16 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021144891 A
- JP 2016516876 A